# EUROPEAN PATENT SPECIFICATION

(11) **EP 1 775 903 B1**
(45) Date of publication and mention of the grant of the patent: **13.04.2011**
(21) Application number: 06021530.8
(22) Date of filing: 13.10.2006
(51) Int. Cl.: H04L 29/06, H04L 12/22, H04L 12/46

(54) **A dynamic tunnel construction method for secure access to a private LAN and apparatus therefor**
Vorrichtung und Verfahren zum dynamischen Aufbauen eines Tunnels zum sicheren Zugriff auf ein privates LAN
Méthode et dispositif dynamique de construction d'un tunnel donnant accès sécurisé à un LAN privé

(30) Priority: 14.10.2005 CN 200510030524
(43) Date of publication of application: 18.04.2007
(73) Proprietor: Alcatel Lucent, 75008 Paris (FR)
(72) Inventor: Zhang, QingShan, Pudong Jinquiao 2001206 Shanghai (CN); Bin, FangXiang, Pudong Jinquiao 2001206 Shanghai (CN); Yan, RenXiang, Pudong Jinquiao 201206 Shanghai (CN); Wen, HaiBo, Pudong Jinquiao 2001206 Shanghai (CN)
(74) Representative: Schmidt, Werner Karl

(56) References cited:
- EP-A- 1 411 676
- US-A1- 2003 188 001

## Description

### FIELD OF THE INVENTION

The present invention relates generally to a secure access to a private LAN, and more particularly to a dynamic tunnel construction method for securely accessing to the private LAN and apparatus therefor.

### BACKGROUND OF THE INVENTION

United States Patent Application US 2003/0188001 A1 discloses a tunneling system and method for traversing firewalls, NATs and proxies. The method comprises monitoring requests for data transfer to one or more determinable ports of the second device, creating at least one reliable connection-based data channel to the second device in response to one or more of said requests, intercepting data of a connectionless protocol destined for one or more determinable destination ports of the second device, and encapsulating the intercepted data and sending it to the second device via the reliable connection-based data channel.

European Patent Application EP 1 411 676 A1 discloses a method for dynamic definition of layer 2 tunneling connections comprising the steps of requiring a layer 2 tunneled connection, deducing and specifying the peers of the tunnel and configuring and creating a layer 2 tunnel between the deduced peers. A specific control layer 2 tunneling control service that is located in or behind the network access server deduces that for a connection set-up request a layer 2 tunneling protocol (L2TP) tunnel is necessary. It triggers the NAS dynamically defining and set up of an L2TP tunnel, i.e. configuring the peers on the fly.

As an IP address resource will be becoming extremely rich in a future Ipv6 environment, with various kinds of electronic devices intelligentized and formed into networks, each device within a private LAN (such as intranet, home-network or the like) will become possible to own an independent IP address, through which or a domain name corresponding the IP address the respective devices may be addressed from an external network. This will make it possible in technique to remotely access to and control the devices within the private LAN via Internet. As applications and services are developing, it will become gradually an imminent need for those subscribers to perform a remote access to and control of the devices within the private LAN.

However, the owners of the devices do not like to let their devices within the private LAN to be optionally accessed to from the external network due to consideration of the privacy and sensitivity of the devices within the private LAN. If the external network is permitted to optionally access to those devices, the devices will suffer a huge risk of being attacked, which may lead to a severe damage upon the owners of the devices.

A tunnel technique is a scheme widely used at the present to solve the above secure access problems that occur in access to the private LAN. In this scheme, the authenticated subscribers in the external network may legally access to the devices within the private LAN via a secure communication tunnel established between the private LAN and the external network, while the other hosts/devices which do not pass authentication in the external network cannot access to the private LAN.

In prior art, various kinds of tunnel technique based Virtual Private Network (VPN) technologies belong presently to a relatively perfect mechanism for securely accessing to the private network. In VPN technologies, there has been provided for the subscribers a virtual private network, which has a similar security to those private networks formed of private physics lines that are rented by the subscribers while conducting a communication by means of fundamental facilities of public networks. With the tunnel technique, the VPN enables legal subscribers having been passed identity authentication to access to LANs within the VPN from the external network, and prevents the other hosts/devices which do not pass authentication in the external network from accessing to these LANs. Moreover, the communications between the external network and the VPN LANs have security and privacy.

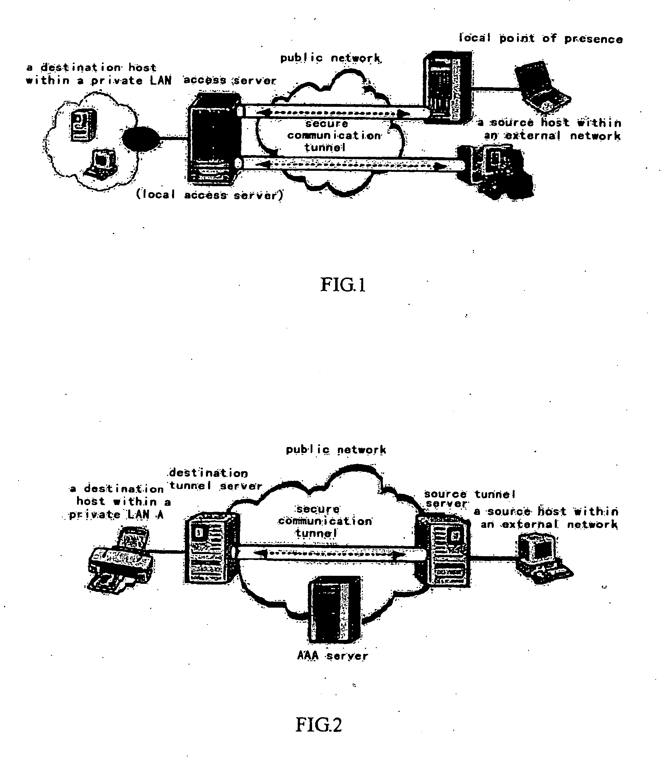

Fig.1 illustrates two access modes in the VPN technologies: a remote access mode and a local access mode. Both modes access to the LANs in the VPN via the respective secure communication tunnels. The secure communication tunnel establishment methods and the shortages thereof in the two access modes will be briefly described below.

### (1) remote access mode

In the remote access mode, the secure communication tunnel is often fixedly configured, that is, a secure tunnel is manually configured by a manager of the private LAN (VPN) in advance between a local point of presence and a remote access server. Here the remote access server and the local point of presence are referred to as tunnel server. When a certain source host within the external network needs to access to the private LAN (VPN), it is first connected to the local point of presence (POP), and then issues an access request for a remote access server to be accessed to in the private LAN. Upon an identity authentication having been passed, the source host within the external network becomes possible to access to the private LAN in distance via the secure tunnel established in advance.

The main shortages of the remote access mode lie in that: the secure tunnel is manually configured, so a lot of manually configuring jobs are required for VPN managers. Moreover, when networking components vary in the private LAN (VPN), for example, IP address is modified for the present remote access server/local point of presence, or a new remote access server/local point of presence is configured, etc., such statically configured manual tunnels need to be manually modified, which will become complicated.

### (2) local access mode

In the local access mode, when a source host within the external network is about to access to the private LAN (VPN), it is first directly connected to a local access server to be accessed to in a local private LAN. In other words, the source host within the external network needs to be aware of an IP address of a corresponding local access server. Upon an identity authentication having been passed, a secure communication tunnel is established through negotiation between the local access server and the source host within the external network. Thereafter, the source host within the external network becomes possible to access to the private LAN in local via the tunnel. In such a mode, the roles of the tunnel servers are played by the local access servers and the source hosts within the external network.

The main shortages of the local access mode lie in that: the tunnel is not transparent with respect to the subscribers. In other words, when a secure communication tunnel is to be established to access to a certain private LAN (VPN) from the external network, the subscribers are required to provide an IP address for the access servers with respect to corresponding private LANs. In order to access to various private LANs, the subscribers need to keep in memory a lot of addresses for the access servers, which will increase the burden and difficulty of the subscribers using VPN.

In addition, neither of the above two kinds of tunnel establishment methods supports subscriber devices of a small scale. All the hosts in the external network that are used to access to the private LANs participate in establishment procedures of secure communication tunnels to different extents. Especially for the local access mode, the hosts within the external network serve as tunnel servers to be directly in charge of the negotiation and establishment of the secure communication tunnels, which requires those hosts to install therein a tunnel support software that is complicated. In several circumstances, however, the devices that the subscribers use to access to the private LANs are likely to be quite simple in hardware and software, without such a tunnel support software installed or installable therein. As a result, the devices that the subscribers use to access to the private LANs will not be able to access to the private LANs via the secure tunnels.

### SUMMARY OF THE INVENTION

The present invention provides a dynamic tunnel establishment method that is novel. In the method of the present invention, a source tunnel server or a destination tunnel server is disposed on a routing device through which a source host transmits IP data packets or a routing device through which a destination host receives IP data packets. Subsequently, a secure communication tunnel is established automatically rather than manually between the source and destination tunnel servers, without requiring any IP address to be provided for the access servers with respect to corresponding private LANs.

The method of the present invention comprises the following steps:

Firstly, a source host within an external network transmits subscriber identity authentication information to a party to which an identity authenticating unit pertains so as to perform an identity authentication at the party to which the identity authenticating unit pertains. Wherein the subscriber identity authentication information includes subscriber name, subscriber password, IP address and port number of the destination host, and IP address of the source host. The IP address of the source host may be a default value indicating an external network host itself having originated an access to the private LAN.

Secondly, upon the identity authentication having been passed, the party to which the identity authenticating unit pertains generates an IP data packet containing a secure communication tunnel establishment command. Wherein the IP data packet is subjected to encryption and subsequent transmission to a device on a side of a destination host within the private LAN, the device is disposed on a path through which the destination host receives/transmits IP data packets. The contents of the IP data packet containing the secure communication tunnel establishment command include IP address of the source host, IP address and port number of the destination host, and preserved parameters for establishing the secure communication tunnel. The destination address of the IP data packet is IP addresses of the destination host.

Thirdly, the device on the side of the destination host intercepts and de-encrypts the IP data packet containing the secure communication tunnel establishment command, and then generates an IP data packet containing a tunnel negotiation command, which is subjected to encryption and subsequent transmission to a device on a side of the source host within the external network, the device is disposed on a path through which the source host receives/transmits IP data packets. The destination address of the IP data packet is IP address of the source host.

Thereafter, the device on the side of the source host intercepts and de-encrypts the IP data packet containing the tunnel negotiation command, and then generates an IP data packet containing a tunnel negotiation response command, which is subjected to encryption and subsequently transmitted to the device on the side of the destination host; and

Finally, the device on the side of the destination host intercepts and de-encrypts the IP data packet containing the tunnel negotiation response command. The device on the side of the destination host negotiates with the device on the side of the source host to establish a secure communication tunnel in accordance with tunnel parameters within the tunnel negotiation command.

The device on the side of the above source host performing interception, de-encryption, generation, encryption and transmission of the IP data packets is a source tunnel server disposed on the path through which the source host receives/transmits IP data packets.

The device on the side of the above destination host performing interception, de-encryption, generation, encryption and transmission of the IP data packets is a destination tunnel server disposed on the path through which the destination host receives/transmits IP data packets.

The present invention also provides a tunnel server, wherein the tunnel server is either disposed on a path through which a source host within an external network receives/transmits IP data packets, to serve as a source tunnel server, or on a path through which a destination host within a private LAN receives/transmits IP data packets, to serve as a destination tunnel server, comprising:
a tunnel negotiating unit being configured to negotiate with a tunnel server at an opposite end about encryption/de-encryption parameters of tunnel in accordance with corresponding instruction;
a tunnel data packet processing unit being configured to perform an encrypting/ a de-encrypting process of the IP data packets transmitted via secure communication tunnel in accordance with the encryption/de-encryption parameters of tunnel;
a security policy & security union database further including a security policy database for storing various kinds of security policies and a security union database for storing various kinds of security unions,
a tunnel command filtering unit being configured to intercept the IP data packet containing tunnel command from the external network;
a tunnel command processing unit being configured to perform a de-encryption of the IP data packet containing tunnel command intercepted by the tunnel command filtering unit, and to issue corresponding instruction in accordance with contents of the tunnel command; and
a tunnel command generating unit being configured to generate corresponding tunnel command in accordance with the instruction from the tunnel command processing unit, and to encrypt and transmit the tunnel command to a destination address.

With the dynamic tunnel establishment method of the present invention, the following contributions are made against the prior art:
1. Automation: it is possible to dynamically and automatically establish the secure communication tunnel without any manual intervention, there is no influence to the dynamic tunnel establishment method in spite of networking components having changed.
2. Facilitation: the secure tunnel is transparent with respect to the subscribers, who therefore need not keep in memory any addresses of tunnel servers, which leads the use of the subscribers easier.
3. Support for Simple Hosts: the establishment of the secure communication tunnel in the present method is fully accomplished by the devices (including AAA servers, tunnel servers or the like) of network service provider (NSP).

Except for providing identity authentication information, the source hosts within the external network need no configuration and process in relation to the negotiation and establishment of the secure communication tunnels. Therefor, there is no need to install those support software and hardware in relation to the negotiation and establishment of the secure communication tunnels. With the present method, those hosts relatively simply in software and hardware are also able to dynamically establish the secure communication tunnels for accessing to the private LANs.

The other objectives and advantages of the present invention would become apparent, and the present invention would be more fully understood from the description given below in conjunction with the drawings as well as claims.

### BRIEF DESCRIPTION OF THE DRAWINGS

The present invention and the advantages thereof will be further described by means of exemplary embodiments and the accompanying drawings:
Fig.1 is a diagram of a remote access mode and a local access mode in the prior VPN technologies;
Fig.2 is a diagram of a systemic structure of a dynamic tunnel establishment method according to the first embodiment of the present invention;
Fig.3 is a flow chart of a dynamic tunnel establishment method according to the second embodiment of the present invention; and
Fig.4 is a block diagram of a tunnel server according to the second embodiment of the present invention.

### DETAILED DESCRIPTION OF THE PREFERRED EMBODIMENTS

The present invention will be further described below in detail with reference to the preferred embodiments and the drawings.

### (The First Embodiment)

Fig.2 is a diagram of a systemic structure of a dynamic tunnel establishment method according to the first embodiment of the present invention. It is supposed for such a situation where a certain subscriber is one of the legal subscribers of private LAN A to which their companies pertain, who has been at other places than the local due to business trips or the other causes. There is a question, what to do for the subscriber to securely access to private LAN A if he/she needs to access to private LAN A, to which their companies pertain, to obtain essential materials therefrom. This mission requires the method of establishing dynamic tunnel of the present invention to establish a secure communication tunnel between the source host within the external network and the destination host within the private LAN, thereby the source host accessing to the destination host via the secure communication tunnel. Fig.2 illustrates a systemic structure, of the dynamic tunnel establishment method, in which one tunnel server is disposed on a path through which the source host within the external network receives/transmits IP data packets, to serve as a source tunnel server, while the other tunnel server is disposed on a path through which the destination host within the private LAN receives/transmits IP data packets, to serve as a destination tunnel server; an identity authenticating unit is disposed on a server within a public network to perform an identity authentication of a subscriber who is going to access to the private LAN. Thereafter, a secure communication tunnel becomes established between the source host and the destination host, thereby the source host accessing to the destination host via the secure communication tunnel.

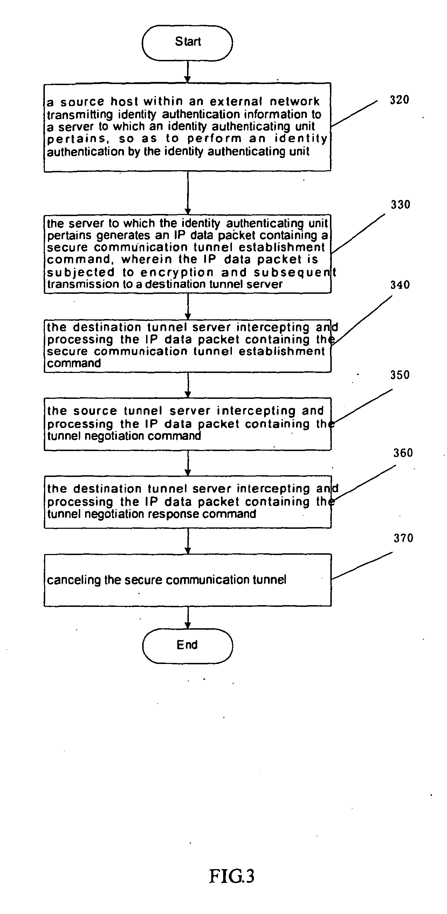

Fig.3 is a flow chart of a dynamic tunnel establishment method according to the second embodiment of the present invention.

The source host within the external network transmits subscriber identity authentication information to the server to which the identity authenticating unit pertains, so as to perform the identity authentication at the identity authenticating unit (step 320). The subscriber identity authentication information includes subscriber name, subscriber password, IP address and port number of the destination host, and IP address of the source host.

The step of the identity authenticating unit performing the identity authentication of the received identity authentication information further comprises the following steps:

The identity authenticating unit acquires a network address range of the private LANs corresponding to the subscriber names from an AAA server within a public network in accordance with the received information, and checks whether or not the subscriber name and password belongs to legal subscriber of the private LAN and whether or not the destination host to be subjected to access to belongs to the private LAN.

If the identity authenticating unit has checked the subscriber being one of legal subscribers, the server to which the identity authenticating unit pertains generates an IP data packet containing a secure communication tunnel establishment command. The IP data packet is subjected to encryption and subsequent transmission to the destination tunnel server (step 330). The contents of the IP data packet containing the secure communication tunnel establishment command include IP address of the source hosts, IP address and port number of the destination host, and preserved parameters for establishing the secure communication tunnel. The destination address of the IP data packet is IP address of the destination host. The IP address of the source host may be a default value indicating an external network host itself having originated an access to said private LAN.

The destination tunnel server intercepts and processes the IP data packet containing the secure communication tunnel establishment command (step 340). The destination tunnel server intercepts the IP data packet containing tunnel commands in accordance with the methods derived from in-advance negotiations, and performs a de-encryption of the IP data packet, subsequently issues corresponding instruction in accordance with the contents of the tunnel command. Since the tunnel command described herein is to establish the secure communication tunnel, the destination tunnel server generates, in accordance with the instruction, an IP data packet containing a tunnel negotiation command, which is subjected to encryption and subsequently transmitted to the source tunnel server. The destination address of the IP data packet is IP address of the source host.

The source tunnel server intercepts and processes the IP data packet containing the tunnel negotiation command (step 350). The source tunnel server intercepts the IP data packet containing the tunnel negotiation command in accordance with the methods derived from in-advance negotiations. The contents of the IP data packet containing the tunnel negotiation command include IP address of the source host, IP address and port number of the destination host, and parameters regarding the secure communication tunnel. The source tunnel server then performs a de-encryption of the IP data packet, and issues corresponding instruction in accordance with the contents of the tunnel command. Since the tunnel command described herein is to negotiate with respect to the secure communication tunnel, the source tunnel server generates, in accordance with the instruction, an IP data packet containing a tunnel negotiation response command, which is subjected to encryption and subsequent transmission to the destination tunnel server.

The destination tunnel server intercepts and processes the IP data packet containing the tunnel negotiation response command (step 360). The destination tunnel server intercepts the IP data packet containing the tunnel command in accordance with the method derived from in-advance negotiations, and performs a de-encryption of the IP data packet, subsequently issues corresponding instruction in accordance with the contents of the tunnel command. Since the tunnel command described herein is the tunnel negotiation response command, when the tunnel command processing unit has determined it being accurate response command in accordance with the corresponding instruction, the tunnel negotiating module is called to enable the destination tunnel server to negotiate with the source tunnel server in accordance with the tunnel parameters within the tunnel negotiation command thereby to establish the secure communication tunnel.

During the aforesaid procedure of establishing the secure communication tunnel, the destination tunnel server, the source tunnel server, or the server to which the identity authenticating unit pertains intercepts the IP data packet containing the tunnel command in accordance with the method derived from in-advance negotiations. The method may be flexibly designed. There rise two instances.

For example, it is possible to perform such an interception in accordance with Security Parameter Index (SPI) within header of said IP data packet. As for the Security Parameter Index, a stipulated reserved Security Parameter Index is placed into the header of the IP data packet as the Security Parameter Index (SPI) of the IP data packet, after encrypting the IP data packets containing tunnel commands at the party to which the identity authenticating unit pertains, a device on a side of the source host or a device on a side of the destination host.

As another example, it is possible to perform such an interception in accordance with the source address within the IP data packet. As for the source address, a stipulated reserved address is used as the source address of the IP data packet, after encrypting the IP data packet containing tunnel command at the party to which the identity authenticating unit pertains, a device on a side of the source host or a device on a side of the destination host. During the aforesaid procedure of establishing the secure communication tunnel, the IP data packet is encrypted or de-encrypted, at the source tunnel server, the destination tunnel server, and the server to which the identity authenticating unit pertains, in accordance with security policies derived from their negotiation with each other and security unions corresponding to the security policies. The security policies and security unions are respectively stored in a security policy database and security union database that are those of the prior art.

As soon as a secure communication tunnel has been established between the source tunnel server and destination tunnel server, the source host within the external network becomes able to access to the destination host within the private LAN via the secure communication tunnel.

When it has been finished for the source host within the external network to access to the private LAN via the secure communication tunnel, the secure communication tunnel may be cancelled (step 370). In specific, this includes the following steps: the source host within the external network transmits the subscriber identity authentication information to the server to which the identity authenticating unit pertains. Thereafter, the server to which the identity authenticating unit pertains perform an identity authentication of the received information, upon having been subjected to the identity authentication, transmits an encrypted IP data packet containing a secure communication tunnel cancellation command to the destination tunnel server, wherein the destination addresses of the IP data packets are IP addresses of the destination hosts. Finally, the destination tunnel server issues a notification of cancelling the secure communication tunnel to the source tunnel server, and deletes tunnel parameters within the destination tunnel server.

In the present embodiment, the identity authenticating unit is independently disposed on the server such as AAA server within the public network. However, it should be appreciated by the skilled in the art that the identity authenticating unit is allowed to have quite flexible dispositions, it can be either independently disposed on the other devices within the public network, or disposed on the destination tunnel server or the source tunnel server.

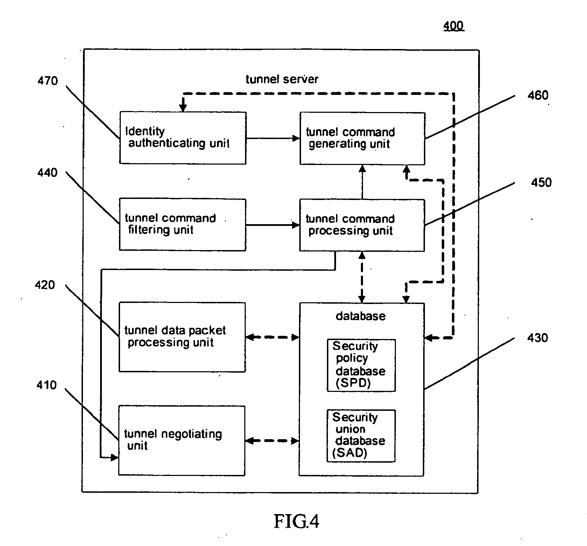

Fig.4 is a block diagram of a tunnel server according to the second embodiment of the present invention.

The tunnel server is disposed on a path through which a source host within the external network receives/transmits data packets, to serve as a source tunnel server, or on a path through which a destination host within the private LAN receives/transmits data packets, to serve as a destination tunnel server. Thus, a secure communication tunnel can be dynamically established between the source tunnel server and the destination tunnel server, and used to securely access to the private LAN.

A tunnel server 400 comprises a tunnel negotiating unit 410, a tunnel data packet processing unit 420, a database 430, a tunnel command filtering unit 440, a tunnel command processing unit 450, and a tunnel command generating unit 460. Among the above units, the tunnel negotiating unit 410, the tunnel data packet processing unit 420, and the database 430 are normal modules of the tunnel server that belong to the prior art. However, the tunnel command filtering unit 440, the tunnel command processing unit 450, and the tunnel command generating unit 460 are newly added modules in the present invention. With these newly added modules, a secure communication tunnel can be dynamically established between the source tunnel server and the destination tunnel server, without any participation of the devices of the subscribers. Thus the tunnel server addressing the network can be automatically completed without any manual configuration of the address information of the tunnel server.

The tunnel negotiating unit 410 is used to negotiate with a tunnel server at an opposite end, with respect to encryption/de-encryption parameters of tunnels, in accordance with corresponding instructions. The tunnel negotiating unit 410 is normal model of tunnel server. "a tunnel server at an opposite end" described herein is in relation to the tunnel server 400. If the tunnel server 400 is a source tunnel server, the tunnel server at the opposite end is a destination tunnel server, *vice versa.*

The tunnel data packet processing unit 420 is used to perform an encryption/de-encryption process of data packets transmitted via the secure communication tunnel in accordance with the encryption/de-encryption parameters of tunnels. The tunnel data packet processing unit 420 is a normal module of the tunnel server.

The database 430 includes a security policy database for storing various kinds of security policies and a security union database for storing various kinds of security unions. The database 430 is a normal module of the tunnel server.

The security policy (SP) and security union (SA) belong to a convention set up between two communication entities, for example, the source host within the external network and the destination host within the private LAN, for purposes of secure communications. Among them, the security policy is intended to determine whether outgoing or incoming IP data packet needs security assurances and protections, includes at least two optional symbols of the source and destination addresses of the IP data packets. In addition, the security policy further includes the other optional symbols of the source and destination ports or the like. Various kinds of security policies may be stored in the security policy database. The security union is intended to determine IPSec protocols, encryption manners, secret keys, and effective duration of the secret keys or the like for the security assurances and protections of the IP data packets. Similarly, various kinds of security union may be stored in the security union database. The correspondence between the security policy and the security union belongs to the prior art.

The tunnel command filtering unit 440 is used to intercept the IP data packet containing tunnel commands from the external network. There may be a plurality of flexible approaches for the tunnel command filtering unit 440 to intercept the IP data packet containing tunnel commands. For the details, refer to the description of the first embodiment. Such details are no longer repeated for the present embodiment.

The tunnel command processing unit 450 is used to perform a de-encryption of the IP data packet containing the tunnel commands that is intercepted by the tunnel command filtering unit, and to issue corresponding instructions to the tunnel negotiating unit 410 or the tunnel command generating unit 460 in accordance with the contents of the tunnel commands. If the tunnel command is a secure communication tunnel establishment command, the tunnel command processing unit 450 issues an instruction to the tunnel command generating unit 460 to generate and transmit a secure communication tunnel negotiation command. If the tunnel command is a secure communication tunnel negotiation command, the tunnel command processing unit 450 issues an instruction to the tunnel command generating unit 460 to generate and transmit a secure communication tunnel negotiation response command. If the tunnel command is a secure communication tunnel negotiation response command, the tunnel command processing unit 450 issues an instruction to the tunnel negotiating unit 410 to negotiate with the tunnel server at the opposite end with respect to encryption/de-encryption parameters.

The tunnel command generating unit 460 is used to generate corresponding tunnel commands in accordance with the instructions from the tunnel command processing unit 450 so as to perform an encryption of the tunnel commands and then transmit it to a destination address. The corresponding tunnel commands described herein include tunnel establishment commands, tunnel negotiation commands, tunnel negotiation response commands, or tunnel cancellation commands. If the tunnel command generating unit 460 is a tunnel command generating unit within the destination tunnel server, it generates the tunnel commands including tunnel establishment commands (if the identity authenticating unit is disposed within the destination tunnel server), tunnel negotiation commands, and tunnel cancellation commands. If the tunnel command generating unit 460 is a tunnel command generating unit within the source tunnel server, it generates the tunnel commands including tunnel negotiation response commands.

Alternatively, the tunnel server 400 may further include an identity authenticating unit 470 that is used to perform an identity authentication of the source host within the external network. The identity authenticating unit 470 acquires from an AAA server within the public network a network address range of the private LANs corresponding to the subscriber name in accordance with the identity authentication information transmitted from the source host within the external network. The identity authentication information includes subscriber names, subscriber passwords, IP addresses and port numbers of the destination hosts, and IP addresses of the source hosts. Thereafter, the identity authenticating unit 470 checks whether or not the subscriber name and password belong to legal subscribers of the private LAN and whether or not the destination host to be subjected to access belongs to the private LAN. If it has been checked that the subscriber is one of legal subscribers, this subscriber is entitled to access to the private LAN.

There has been disposed within the public network an AAA (Authentication, Authorization, Accounting) server, which is a universal server intended for authentication, authorization and accounting, and belongs to the prior art.

It is worthy to be noted that the identity authenticating unit 470 may be disposed in other places than within the tunnel server 400. In general, the identity authentication processing unit 470 may flexibly undergo an independent disposition on the servers (such as AAA servers) within the public network, instead of the restricted disposition on the tunnel servers.

The next description is presented in detail with regard to the encryption or de-encryption performed on the IP data packet. The IP data packet is subjected to encryption/de-encryption process at the source tunnel server and the destination tunnel server in accordance with the security policies derived from their negotiation with each other and the security unions corresponding to the security policies. The security policies and the security unions are stored in the security policy & security union database, such a database belongs to the prior art. In the present embodiment, the security policy & security union database is included in the database 430. As apparent from Fig.4, the connection are indicated by imaginary lines with two reversible arrows between the database 430 and the tunnel negotiating unit 410, tunnel data packet processing unit 420, tunnel command processing unit 450, or tunnel command generating unit 460, to illustrate the interaction of data between the database 430 and the above units. In other words, the database 430 is always called when the above units need to encrypt/de-encrypt the IP data packets.

The dynamic tunnel establishment method described above for securely accessing to the private LAN has the following beneficial effects over the prior secure communication tunnel establishment method:

Firstly, the dynamic tunnel establishment method described above has an automatic capability: it is possible to dynamically and automatically establish the secure communication tunnel without any manual intervention, there is no influence to the dynamic tunnel establishment method in spite of networking components having changed. Moreover, the secure communication tunnel may be cancelled upon having completed communications.

Secondly, the dynamic tunnel establishment method described above has a facilitation: the secure tunnel is transparent with respect to the subscribers, who therefore need not keep in memory any addresses of tunnel servers, which leads the use of the subscribers easier.

Thirdly, the dynamic tunnel establishment method described above supports for the simple hosts: the establishment of the secure communication tunnel in the present method is fully accomplished by the devices (including AAA servers, tunnel servers or the like) of network service provider (NSP). Except for providing identity authentication information, the source hosts within the external network need no configuration and process in relation to the negotiation and establishment of the secure communication tunnels. Therefore, there is no need to install those support software and hardware in relation to the negotiation and establishment of the secure communication tunnels. With the present method, those hosts relatively simply in software and hardware are also able to dynamically establish the secure communication tunnels for accessing to the private LANs.

## Claims

1. A method for establishing a dynamic tunnel of securely accessing to a private LAN, the method comprises the following steps:
a. Transmitting (320), at a source host within an external network, subscriber identity authentication information to a party to which an identity authenticating unit pertains so as to perform an identity authentication at the party to which said identity authenticating unit pertains; and
b. upon the identity authentication having been passed, generating (330) an IP data packet containing a secure-communication-tunnel-establishment command at the party to which said identity authenticating unit pertains, wherein said IP data packet is subjected to encryption and subsequently transmitted to a device on a side of a destination host within the private LAN, the device being disposed on a path through which said destination host receives/transmits IP data packets;
c. intercepting and de-encrypting, at the device on the side of said destination host, the IP data packet containing the secure-communication-tunnel-establishment command (340), then generating an IP data packet containing a tunnel negotiation command, the IP data packet being subjected to encryption and subsequently transmitted to a device on a side of the source host within said external network, the device being disposed on a path through which said source host receives/transmits IP data packets;
d. intercepting and de-encrypting, at the device on the side of said source host, the IP data packet containing the tunnel negotiation command (350), then generating an IP data packet containing a tunnel negotiation response command, which is subjected to encryption and subsequently transmitted to the device on the side of said destination host; and
e. intercepting and de-encrypting the IP data packet containing the tunnel negotiation response command (360), and negotiating with the device on the side of said source host to establish a secure communication tunnel in accordance with tunnel parameters within said tunnel negotiation command at the device on the side of said destination host.

2. The method according to claim 1, wherein said subscriber identity authentication information includes subscriber name, subscriber password, IP address and port number of said destination host, and IP address of said source host.

3. The method according to claim 2, wherein the IP address of said source host may be a default value indicating an external network host itself having originated an access to said private LAN.

4. The method according to claim 3, wherein performing the identity authentication of the received information at the party to which said identity authenticating unit pertains in step a further comprises the following steps: Acquiring a network address range of the private LAN corresponding to said subscriber name, at the party to which said identity authenticating unit pertains, from an AAA server within a public network, in accordance with the received information; and checking whether or not said subscriber name and password belong to legal subscriber of said private LAN and whether or not the destination host to be subjected to access belongs to said private LAN.

5. The method according to claim 4, wherein contents of said IP data packet containing the secure-communication-tunnel-establishment command include IP address of said source host, IP address and port number of said destination host, and preserved parameters for establishing said secure communication tunnel, wherein destination address of said IP data packet is IP address of said destination host.

6. The method according to claim 5, wherein said IP data packet containing tunnel command is intercepted at the device on the side of said source host or said destination host in accordance with stipulated Security Parameter Index (SPI) within header of said IP data packet, wherein said Security Parameter Index is placed into the header of said IP data packet after encrypting said IP data packet containing tunnel command at the party to which said identity authenticating unit pertains, the device on the side of said source host, or the device on the side of said destination host.

7. The method according to claim 5, wherein said IP data packet containing tunnel command is intercepted at the device on the side of said source host and said destination host in accordance with source address of said IP data packet, wherein said source addresses use a stipulated reserved address as the source address of said IP data packet after encrypting said IP data packet containing tunnel command at the party to which said identity authenticating unit pertains, the device on the side of said source host or the device on the side of said destination host.

8. The method according to one of claims 6 and 7, wherein said IP data packet containing tunnel command is encrypted or de-encrypted, at the devices on the sides of said source host and said destination host and at the party to which said identity authenticating unit pertains, in accordance with security policy derived from their negotiation with each other and security union corresponding to the security policy.

9. The method according to claim 8, wherein contents of said IP data packet containing the tunnel negotiation command include IP addresses of said source host, IP addresses and port number of said destination host, and parameters regarding said secure-communication-tunnel-purpose, wherein the destination addresses of said IP data packet is IP address of said destination host.

10. The method according to claim 9, wherein the device on the side of said source host performing interception, de-encryption, generation, encryption and transmission of said IP data packet may be a source tunnel server disposed on the path through which said source host receives/transmits IP data packets.

11. The method according to claim 9, wherein the device on the side of said destination host performing interception, de-encryption, generation, encryption and transmission of said IP data packet may be a destination tunnel server disposed on the path through which said destination host receives/transmits IP data packets.

12. The method according to one of claims 10 and 11, further comprising:
f. cancelling (370) said secure communication tunnel after the source host within said external network having accessed to said private LAN via said secure communication tunnel.

13. The method of claim 12, wherein step f further comprises the following steps: f1. transmitting, at the source host within said external network, subscriber identity authentication information to the party to which said identity authenticating unit pertains; f2. performing an identity authentication of the received information at the party to which said identity authenticating unit pertains, and upon the identity authentication having been passed, transmitting an IP data packet containing a secure-communication-tunnel-cancellation command to the device on the side of said destination host, wherein the destination address of the IP data packet is IP address of the destination host; and f3. issuing at the device on the side of said destination host a notification of cancelling said secure communication tunnel to the device on the side of said source host, and deleting the tunnel parameters within the device on the side of said destination host.

14. A tunnel server for securely accessing to a private LAN, wherein said tunnel server is either disposed on a path through which a source host within an external network receives/transmits IP data packets, to serve as a source tunnel server, or on a path through which a destination host within the private LAN receives/transmits IP data packets, to serve as a destination tunnel server, comprising:
- a tunnel negotiating unit (410) being configured to negotiate with a tunnel server at an opposite end about encryption/de-encryption parameters of tunnel in accordance with corresponding instruction;
- a tunnel data packet processing unit (420) being configured to perform an encrypting/ a de-encrypting process of the IP data packets transmitted via secure communication tunnel in accordance with the encryption/de-encryption parameters of the tunnel; and
- a security policy & security union database (430), it further including a security policy database for storing various kinds of security policies and a security union database for storing various kinds of security union, wherein said security policy database corresponds to said security union database;
- a tunnel command filtering unit (440) being configured to intercept IP data packets containing tunnel commands from the external network;
- a tunnel command processing unit (450) being configured to perform a de-encryption of the IP data packets containing tunnel commands intercepted by said tunnel command filtering unit, and to issue corresponding instructions in accordance with the contents of the tunnel command;
- and a tunnel command generating unit (460) being configured to generate corresponding tunnel commands in accordance with the instructions from said tunnel command processing unit, and to encrypt and transmit the tunnel commands to respective destination addresses.

15. The tunnel server according to claim 14, wherein said tunnel server further comprises an identity authentication processing unit (470) being configured to receive subscriber identity authentication information issued by the source host within said external network and to perform an identity authentication thereof.

16. The tunnel server according to claim 15, wherein each IP data packet containing a tunnel command is intercepted by said tunnel command filtering unit in accordance with a stipulated Security Parameter Index (SPI) within the header of said IP data packet, wherein said Security Parameter Index is placed into the header of said IP data packet after encrypting said IP data packet containing a tunnel command at the party to which said identity authenticating unit pertains or the tunnel server.

17. The tunnel server according to claim 15, wherein said IP data packet containing tunnel command is intercepted by said tunnel command filtering unit in accordance with the source address of said IP data packet, wherein said source address uses a stipulated reserved address as the source address of said IP data packet after encrypting said IP data packet containing a tunnel command at the party to which said identity authenticating unit pertains or the tunnel server.

18. The tunnel server according to one of claims 16 and 17, wherein said IP data packet containing a tunnel command is encrypted or de-encrypted, at said source tunnel server and said destination server, in accordance with a security policy derived from their negotiation with each other and a security union corresponding to the security policy.

## Patentansprüche

1. Verfahren zum Aufbauen eines dynamischen Tunnels für den sicheren Zugriff auf ein privates LAN, wobei das Verfahren die folgenden Schritte umfasst:
a. Übertragen (320), an einem Quellrechner innerhalb eines externen Netzwerks, von Teilnehmeridentitätsauthentifizierungsinformationen an einen Teilnehmer, zu welchem eine besagte Identitätsauthentifizierungseinheit gehört, um eine Identitätsauthentifizierung an dem Teilnehmer, zu welchem die besagte Identitätsauthentifizierungseinheit gehört, durchzuführen; und
b. nachdem die Identitätsauthentifizierung erfolgt ist, Erzeugen (330) eines IP-Datenpakets, welches einen Befehl für den Aufbau eines sicheren Kommunikationstunnels enthält, an dem Teilnehmer, zu welchem die besagte Identitätsauthentifizierungseinheit gehört, wobei das besagte IP-Datenpaket einer Verschlüsselung unterzogen und anschließend an eine Vorrichtung auf einer Seite eines Zielrechners innerhalb des privaten LAN übertragen wird, wobei die Vorrichtung auf einem Pfad, über welchen der besagte Zielrechner IP-Datenpakete empfängt/überträgt, angeordnet ist;
c. Abfangen und Entschlüsseln, an der Vorrichtung an der Seite des besagten Zielrechners, des IP-Datenpakets, welches den Befehl für den Aufbau eines sicheren Kommunikationstunnels (340) enthält, und anschließend Erzeugen eines IP-Datenpakets, welches einen Tunnelaushandlungsbefehl enthält, wobei das IP-Datenpaket einer Verschlüsselung unterzogen und anschließend an eine Vorrichtung auf einer Seite des Quellrechners innerhalb des externen Netzwerks übertragen wird, wobei die Vorrichtung auf einem Pfad angeordnet ist, über welchen der besagte Quellrechner IP-Datenpaket empfängt/überträgt;
d. Abfangen und Entschlüsseln, an der Vorrichtung auf der Seite des besagten Quellrechners, des IP-Datenpakets, welches den Tunnelaushandlungsbefehl (350) enthält, und anschließend Erzeugen eines einen Tunnelaushandlungsantwortbefehl enthaltenden IP-Datenpakets, welches einer Verschlüsselung unterzogen und anschließend an die Vorrichtung auf der Seite des besagten Zielrechners übertragen wird; und
e. Abfangen und Entschlüsseln des den Tunnelaushandlungsantwortbefehl (360) enthaltenden IP-Datenpakets, und Aushandeln mit der Vorrichtung auf der Seite des besagten Quellrechners für den Aufbau eines sicheren Kommunikationstunnels gemäß in dem besagten Tunnelaushandlungsbefehl enthaltenen Tunnelparametern an der Vorrichtung auf der Seite des besagten Zielrechners.

2. Das Verfahren nach Anspruch 1, wobei die besagten Teilnehmeridentitätsauthentifizierungsinformationen den Teilnehmernamen, das Teilnehmerpasswort, die IP-Adresse und die Portnummer des besagten Zielrechners sowie die IP-Adresse des besagten Quellrechners umfassen.

3. Das Verfahren nach Anspruch 2, wobei die IP-Adresse des besagten Quellrechners ein standardmäßig eingestellter Wert sein kann, welcher einen externen Netzwerkrechner, der selbst einen Zugriff auf das besagte private LAN veranlasst hat, angibt.

4. Das Verfahren nach Anspruch 3, wobei das Ausführen der Identitätsauthentifizierung der empfangenen Informationen an dem Teilnehmer, zu welchem die besagte Identitätsauthentifizierungseinheit in Schritt a gehört, weiterhin die folgenden Schritte umfasst: Beschaffen eines Netzwerkadressenbereichs des privaten LAN, welcher dem besagten Teilnehmernamen entspricht, an dem Teilnehmer, zu welchem die besagte Identitätsauthentifizierungseinheit gehört, von einem AAA-Server innerhalb eines öffentlichen Netzwerks, gemäß den empfangenen Informationen; und Überprüfen, ob der besagte Teilnehmername und das besagte Teilnehmerpasswort einem gültigen Teilnehmer des privaten LAN gehört oder nicht, und ob der dem Zugriff zu unterziehende Zielrechner dem besagten privaten LAN angehört oder nicht.

5. Das Verfahren nach Anspruch 4, wobei die Inhalte des besagten IP-Datenpakets, welches den Befehl für den Aufbau eines sicheren Kommunikationstunnels enthält, die IP-Adresse des besagten Quellrechners, die IP-Adresse und Portnummer des besagten Zielrechners, und erhaltene Parameter für den Aufbau des besagten sicheren Kommunikationstunnels enthalten, wobei die Zieladresse des besagten IP-Datenpakets die IP-Adresse des besagten Zielrechners ist.

6. Das Verfahren nach Anspruch 5, wobei das besagte IP-Datenpaket, welches den Tunnelbefehl enthält, an der Vorrichtung an der Seite des besagten Quellrechners oder des besagten Zielrechners gemäß dem festgelegten Sicherheitsparameterindex (SPI) innerhalb des Kopfteils des besagten IP-Datenpakets abgefangen wird, wobei der besagte Sicherheitsparameterindex nach der Verschlüsselung des besagten IP-Datenpakets, welches den Tunnelbefehl enthält, an dem Teilnehmer, zu welchem die besagte Identitätsauthentifizierungseinheit gehört, der Vorrichtung auf der Seite des besagten Quellrechners oder der Vorrichtung auf der Seite des besagten Zielrechners in den Kopfteil des besagten IP-Datenpakets eingefügt wird.

7. Das Verfahren nach Anspruch 5, wobei das besagte IP-Datenpaket, welches den Tunnelbefehl enthält, an der Vorrichtung auf der Seite des besagten Quellrechners und des besagten Zielrechners gemäß der Quelladresse des besagten IP-Datenpakets abgefangen wird, wobei die besagten Quelladressen eine festgelegte reservierte Adresse als die Quelladresse des besagten IP-Datenpakets nach der Verschlüsselung des besagten IP-Datenpakets, welches den Tunnelbefehl enthält, an dem Teilnehmer, zu welchem die besagte Identitätsauthentifizierungseinheit gehört, der Vorrichtung auf der Seite des besagten Quellrechners oder der Vorrichtung auf der Seite des besagten Zielrechners verwenden.

8. Das Verfahren nach einem der Ansprüche 6 oder 7, wobei das besagte IP-Datenpaket, welches den Tunnelbefehl enthält, an den Vorrichtungen auf der Seite des besagten Quellrechners und des besagten Zielrechners und an dem Teilnehmer, zu welchem die besagte Identitätsauthentifizierungseinheit gehört, gemäß der von deren gegenseitigen Aushandlung abgeleiteten Sicherheitsrichtlinie und der der Sicherheitsrichtlinie entsprechenden Sicherheitsunion verschlüsselt oder entschlüsselt wird.

9. Das Verfahren nach Anspruch 8, wobei die Inhalte des besagten IP-Datenpakets, welches den Tunnelaushandlungsbefehl enthält, IP-Adressen des besagten Quellrechners, IP-Adressen und Portnummer des besagten Zielrechners, und Parameter bezüglich des Zwecks des besagten sicheren Kommunikationstunnels umfassen, wobei die Zieladresse des besagten IP-Datenpakets die Zieladresse des besagten Zielrechners ist.

10. Das Verfahren nach Anspruch 9, wobei die Vorrichtung auf der Seite des besagten Quellrechners, welche das Abfangen, das Entschlüsseln, das Erzeugen, das Verschlüsseln und das Übertragen des besagten IP-Datenpakets ausführt, ein auf dem Pfad, über welchen der besagte Quellrechner IP-Datenpakete empfängt/überträgt, angeordneter Quell-Tunnel-Server sein kann.

11. Das Verfahren nach Anspruch 9, wobei die Vorrichtung auf der Seite des besagten Zielrechners, welche das Abfangen, das Entschlüsseln, das Erzeugen, das Verschlüsseln und das Übertragen des besagten IP-Datenpakets ausführt, ein auf dem Pfad, über welchen der besagte Zielrechner IP-Datenpakete empfängt/überträgt, angeordneter Ziel-Tunnel-Server sein kann.

12. Das Verfahren nach einem der Ansprüche 10 oder 11, weiterhin umfassend:
f. Löschen (370) des besagten sicheren Kommunikationstunnels hinter dem Quellrechner innerhalb des besagten externen Netzwerks, welcher über den besagten sicheren Kommunikationstunnel auf das private LAN zugegriffen hat.

13. Das Verfahren nach Anspruch 12, wobei Schritt f weiterhin die folgenden Schritte umfasst: f1. Übertragen, am Quellrechner innerhalb des besagten externen Netzwerks, der Teilnehmeridentitätsauthentifizierungsinformationen an dem Teilnehmer, zu welchem die besagte Identitätsauthentifizierungseinheit gehört; f2. Ausführen einer Identitätsauthentifizierung der empfangenen Informationen an dem Teilnehmer, zu welchem die besagte Identitätsauthentifizierungseinheit gehört, und nachdem die Identitätsauthentifizierung erfolgt ist, Übertragen eines IP-Datenpakets, welches einen Befehl für den Aufbau eines sicheren Kommunikationstunnels enthält, an die Vorrichtung auf der Seite des besagten Zielrechners, wobei die Zieladresse des IP-Datenpakets die IP-Adresse des Zielrechners ist; und f3. Ausgeben, an der Vorrichtung auf der Seite des besagten Zielrechners, einer Benachrichtigung über die Löschung des besagten sicheren Kommunikationstunnels an die Vorrichtung auf der Seite des besagten Quellrechners, und Löschen der Tunnelparameter innerhalb der Vorrichtung auf der Seite des besagten Zielrechners.

14. Tunnel-Server für den sicheren Zugriff auf ein privates LAN, wobei der besagte Tunnel-Server entweder auf einem Pfad, über welchen ein Quellrechner innerhalb eines externen Netzwerks IP-Datenpakete empfängt/überträgt, angeordnet ist, um als ein Quell-Tunnel-Server zu dienen, oder auf einem Pfad, über welchen ein Zielrechner innerhalb des privaten LAN IP-Datenpakete empfängt/überträgt, angeordnet ist, um als Ziel-Tunnel-Server zu dienen, umfassend:
- Eine Tunnelaushandlungseinheit (410), welche dafür konfiguriert ist, mit einem Tunnel-Server an einem gegenüberliegenden Ende die Verschlüsselungs-/Entschlüsselungsparameter des Tunnels gemäß entsprechenden Anweisungen auszuhandeln;
- eine Tunneldatenpaketverarbeitungseinheit (420), welche dafür konfiguriert ist, einen Verschlüsselungsprozess/Entschlüsselungsprozess der über den sicheren Kommunikationstunnel übertragenen IP-Datenpakete gemäß den Verschlüsselungs-/Entschlüsselungsparametern des Tunnels auszuführen; und
- eine Sicherheitsrichtlinien- & Sicherheitsunion-Datenbank (430), weiterhin umfassend eine Sicherheitsrichtlinien-Datenbank zum Speichern verschiedener Arten von Sicherheitsrichtlinien, und eine Sicherheitsunion-Datenbank zum Speichern verschiedener Arten von Sicherheitsunionen, wobei die besagte Sicherheitsrichtlinien-Datenbank der besagten Sicherheitsunion-Datenbank entspricht;
- eine Tunnelbefehl-Filtereinheit (440), welche dafür konfiguriert ist, IP-Datenpakete, die Tunnelbefehle von dem externen Netzwerk enthalten, abzufangen;
- eine Tunnelbefehl-Verarbeitungseinheit (450), welche dafür konfiguriert ist, eine Entschlüsselung der von der besagten Tunnelbefehl-Filtereinheit abgefangenen, Tunnelbefehle enthaltenden IP-Datenpakete auszuführen und entsprechende Anweisungen gemäß den Inhalten des Tunnelbefehls auszugeben;
- und eine Tunnelbefehl-Erzeugungseinheit (460), welche dafür konfiguriert ist, entsprechende Tunnelbefehle gemäß den Anweisungen von der besagten Tunnelbefehl-Verarbeitungseinheit zu erzeugen und die Tunnelbefehle zu verschlüsseln und an die jeweiligen Zieladressen zu übertragen.

15. Der Tunnel-Server nach Anspruch 14, wobei der besagte Tunnel-Server weiterhin eine Identitätsauthentifizierungsverarbeitungseinheit (470) umfasst, welche dafür konfiguriert ist, von dem Quellrechner innerhalb des besagten externen Netzwerk ausgegebene Teilnehmeridentitätsauthentifizierungsinformationen zu empfangen und eine Identitätsauthentifizierung dieser auszuführen.

16. Der Tunnel-Server nach Anspruch 15, wobei jedes einen Tunnelbefehl enthaltende IP-Datenpaket gemäß einem festgelegten Sicherheitsparameterindex (SPI) innerhalb des Kopfteils des besagten IP-Datenpakets von der besagten Tunnelbefehl-Filtereinheit abgefangen wird, wobei der besagte Sicherheitsparameterindex nach der Verschlüsselung des besagten einen Tunnelbefehl enthaltenden IP-Datenpakets an dem Teilnehmer, zu welchem die besagte Identitätsauthentifizierungseinheit gehört, oder an dem Tunnel-Server in den Kopfteil des besagten IP-Datenpakets eingefügt wird.

17. Der Tunnel-Server nach Anspruch 15, wobei das besagte IP-Datenpaket, welches einen Tunnelbefehl enthält, gemäß der Quelladresse des besagten IP-Datenpakets von der besagten Tunnelbefehl-Filtereinheit abgefangen wird, wobei die besagte Quelladresse eine festgelegte reservierte Adresse als die Quelladresse des besagten IP-Datenpakets nach der Verschlüsselung des besagten einen Tunnelbefehl enthaltenden IP-Datenpakets an dem Teilnehmer, zu welchem die besagte Identitätsauthentifizierungseinheit gehört, oder an dem Tunnel-Server, verwendet.

18. Der Tunnel-Server nach einem der Ansprüche 16 oder 17, wobei das besagte einen Tunnelbefehl enthaltende IP-Datenpaket an dem besagten Quell-Tunnel-Server und an dem besagten Ziel-Server gemäß einer von deren gegenseitiger Aushandlung und einer der Sicherheitsrichtlinie entsprechenden Sicherheitsunion abgeleiteten Sicherheitsrichtlinie verschlüsselt oder entschlüsselt wird.

## Revendications

1. Procédé pour établir un tunnel dynamique d'accès sécurisé à un réseau local privé, le procédé comprenant les étapes suivantes :
a. transmission (320), sur un hôte source dans un réseau externe, d'informations d'authentification d'identité d'abonné à une partie dont dépend une unité d'authentification d'identité de manière à réaliser une authentification d'identité sur la partie dont dépend ladite unité d'authentification d'abonné ; et
b. lorsque l'authentification d'abonné est réussie, génération (330) d'un paquet de données IP contenant une commande d'établissement de tunnel de communication sécurisée sur la partie dont dépend ladite unité d'authentification d'identité, dans lequel ledit paquet de données IP est soumis à un chiffrement et ensuite transmis à un dispositif sur un côté d'un hôte de destination dans le réseau local privé, le dispositif étant disposé sur un chemin par lequel ledit hôte de destination reçoit/transmet les paquets de données IP ;
c. interception et déchiffrement, sur le dispositif sur le côté dudit hôte de destination, du paquet de données IP contenant la commande d'établissement de tunnel de communication sécurisée (340), puis génération d'un paquet de données IP contenant une commande de négociation de tunnel, le paquet de données IP étant soumis à un chiffrement et ensuite transmis à un dispositif sur un côté de l'hôte source dans ledit réseau externe, le dispositif étant disposé sur un chemin par lequel ledit hôte source reçoit/transmet les paquets de données IP ;
d. interception et déchiffrement, sur le dispositif sur le côté dudit hôte source, du paquet de données IP contenant la commande de négociation de tunnel (350), puis génération d'un paquet de données IP contenant une commande de réponse de négociation de tunnel, qui est soumis à un chiffrement et ensuite transmis au dispositif sur le côté dudit hôte de destination ; et
e. interception et déchiffrement du paquet de données IP contenant la commande de réponse de négociation de tunnel (360) et négociation avec le dispositif sur le côté dudit hôte source pour établir un tunnel de communication sécurisée en fonction des paramètres de tunnel dans ladite commande de négociation de tunnel sur le dispositif sur le côté dudit hôte de destination.

2. Procédé selon la revendication 1, dans lequel lesdites informations d'authentification d'identité d'abonné comprennent le nom d'abonné, le mot de passe d'abonné, l'adresse IP et le numéro de port dudit hôte de destination et l'adresse IP dudit hôte source.

3. Procédé selon la revendication 2, dans lequel l'adresse IP dudit hôte source peut être une valeur par défaut indiquant un hôte d'un réseau externe ayant lui-même initié un accès audit réseau local privé.

4. Procédé selon la revendication 3, dans lequel la réalisation de l'authentification d'identité des informations reçues sur la partie dont dépend dans l'étape a ladite unité d'authentification d'identité comprend en outre les étapes suivantes : acquisition d'une plage d'adresses de réseau du réseau local privé correspondant audit nom d'abonné, sur la partie dont dépend ladite unité d'authentification d'identité, depuis un serveur AAA dans un réseau public, en fonction des informations reçues ; et vérification de si oui ou non lesdits nom et mot de passe d'abonné appartiennent à l'abonné légal dudit réseau local privé et de si oui ou non l'hôte de destination dont l'accès est demandé appartient audit réseau local privé.

5. Procédé selon la revendication 4, dans lequel le contenu dudit paquet de données IP contenant la commande d'établissement de tunnel de communication sécurisée comprend l'adresse IP dudit hôte source, l'adresse IP et le numéro de port dudit hôte de destination et les paramètres conservés pour établir ledit tunnel de communication sécurisée, dans lequel l'adresse de destination dudit paquet de données IP est l'adresse IP dudit hôte de destination.

6. Procédé selon la revendication 5, dans lequel ledit paquet de données IP contenant la commande de tunnel est intercepté sur le dispositif sur le côté dudit hôte source ou dudit hôte de destination en fonction de l'indice de paramètre de sécurité (IPS) stipulé dans l'en-tête dudit paquet de données IP, dans lequel ledit indice de paramètre de sécurité est placé dans l'en-tête dudit paquet de données IP après le chiffrement dudit paquet de données IP contenant la commande de tunnel sur la partie dont dépend ladite unité d'authentification d'identité, le dispositif sur le côté dudit hôte source ou le dispositif sur le côté dudit hôte de destination.

7. Procédé selon la revendication 5, dans lequel ledit paquet de données IP contenant la commande de tunnel est intercepté sur le dispositif sur le côté dudit hôte source et dudit hôte de destination en fonction de l'adresse source dudit paquet de données IP, dans lequel ladite adresse source utilise une adresse réservée stipulée comme adresse source dudit paquet de données IP après le chiffrement dudit paquet de données IP contenant la commande de tunnel sur la partie dont dépend ladite unité d'authentification d'identité, le dispositif sur le côté dudit hôte source ou le dispositif sur le côté dudit hôte de destination.

8. Procédé selon l'une des revendications 6 et 7, dans lequel ledit paquet de données IP contenant la commande de tunnel est chiffré ou déchiffré, sur les dispositifs sur les côtés dudit hôte source et dudit hôte de destination et sur la partie dont dépend ladite unité d'authentification d'identité, en fonction d'une politique de sécurité dérivée de leur négociation les uns avec les autres et d'une association de sécurité correspondant à la politique de sécurité.

9. Procédé selon la revendication 8, dans lequel le contenu dudit paquet de données IP contenant la commande de négociation de tunnel comprend les adresses IP dudit hôte source, les adresses IP et le numéro de port dudit hôte de destination et les paramètres concernant ledit objectif de tunnel de communication sécurisée, dans lequel l'adresse de destination dudit paquet de données IP est l'adresse IP dudit hôte de destination.

10. Procédé selon la revendication 9, dans lequel le dispositif sur le côté dudit hôte source effectuant l'interception, le déchiffrement, la génération, le chiffrement et la transmission dudit paquet de données IP peut être un serveur de tunnel source disposé sur le chemin par lequel ledit hôte source reçoit/transmet les paquets de données IP.

11. Procédé selon la revendication 9, dans lequel le dispositif sur le côté dudit hôte de destination effectuant l'interception, le déchiffrement, la génération, le chiffrement et la transmission dudit paquet de données IP peut être un serveur de tunnel de destination disposé sur le chemin par lequel ledit hôte de destination reçoit/transmet les paquets de données IP.

12. Procédé selon l'une des revendications 10 et 11, comprenant en outre :
f. annulation (370) dudit tunnel de communication sécurisée après que l'hôte source dans ledit réseau externe a accédé audit réseau local privé via ledit tunnel de communication sécurisée.

13. Procédé selon la revendication 12, dans lequel l'étape f) comprend en outre les étapes suivantes : f1. transmission, sur l'hôte source dans ledit réseau externe, des informations d'authentification d'identité d'abonné à la partie dont dépend ladite unité d'authentification d'identité ; f2. réalisation d'une authentification d'identité des informations reçues sur la partie dont dépend ladite unité d'authentification d'identité et lorsque l'authentification d'identité est réussie, transmission d'un paquet de données IP contenant une commande d'annulation de tunnel de communication sécurisée au dispositif sur le côté dudit hôte de destination, dans lequel l'adresse de destination du paquet de données IP est l'adresse IP de l'hôte de destination ; et f3. émission sur le dispositif sur le côté dudit hôte de destination d'une notification d'annulation dudit tunnel de communication sécurisée vers le dispositif sur le côté dudit hôte source, et suppression des paramètres de tunnel dans le dispositif sur le côté dudit hôte de destination.

14. Serveur de tunnel pour un accès sécurisé à un réseau local privé, dans lequel ledit serveur de tunnel est, soit disposé sur un chemin par lequel un hôte source dans un réseau externe reçoit/transmet des paquets de données IP, pour servir de serveur de tunnel source, soit disposé sur un chemin par lequel un hôte de destination dans le réseau local privé reçoit/transmet des paquets de données IP, pour servir de serveur de tunnel de destination, comprenant :
- une unité de négociation de tunnel (410) configurée pour négocier avec un serveur de tunnel sur l'extrémité opposée à propos des paramètres de chiffrement/déchiffrement de tunnel en fonction des instructions correspondantes ;
- une unité de traitement de paquet de données de tunnel (420) configurée pour réaliser un processus de chiffrement/déchiffrement des paquets de données IP transmis via le tunnel de communication sécurisée en fonction des paramètres de chiffrement/déchiffrement du tunnel ; et
- une base de données de politique de sécurité et d'association de sécurité (430), celle-ci comprenant en outre une base de données de politique de sécurité pour stocker divers types de politiques de sécurité et une base de données d'association de sécurité pour stocker divers types d'associations de sécurité, dans lequel ladite base de données de politique de sécurité correspond à ladite base de données d'association de sécurité ;
- une unité de filtrage de commande de tunnel (440) configurée pour intercepter les paquets de données IP contenant des commandes de tunnel provenant du réseau externe ;
- une unité de traitement de commande de tunnel (450) configurée pour réaliser un déchiffrement des paquets de données IP contenant des commandes de tunnel interceptés par ladite unité de filtrage de commande de tunnel et pour émettre des instructions correspondantes en fonction du contenu de la commande de tunnel ;
- et une unité de génération de commande de tunnel (460) configurée pour générer des commandes de tunnel correspondantes en fonction des instructions de ladite unité de traitement de commande et pour chiffrer et transmettre les commandes de tunnel aux adresses de destination respectives.

15. Serveur de tunnel selon la revendication 14, dans lequel ledit serveur de tunnel comprend en outre une unité de traitement d'authentification d'identité (470) configurée pour recevoir les informations d'authentification d'identité d'abonné émises par l'hôte source dans ledit réseau externe et pour réaliser l'authentification d'identité.

16. Serveur de tunnel selon la revendication 15, dans lequel chaque paquet de données IP contenant une commande de tunnel est intercepté par ladite unité de filtrage de commande de tunnel en fonction d'un indice de paramètre de sécurité (IPS) dans l'entête dudit paquet de données IP, dans lequel ledit indice de paramètre de sécurité est placé dans les en-têtes desdits paquets de données IP après le chiffrement dudit paquet de données IP contenant une commande de tunnel sur la partie dont dépend l'unité d'authentification d'identité ou sur le serveur de tunnel.

17. Serveur de tunnel selon la revendication 15, dans lequel chaque paquet de données IP contenant une commande de tunnel est intercepté par ladite unité de filtrage de commande de tunnel en fonction de l'adresse source dudit paquet de données IP, dans lequel ladite adresse source utilise une adresse réservée stipulée comme adresse source dudit paquet de données IP après le chiffrement dudit paquet de données IP contenant une commande de tunnel sur la partie dont dépend l'unité d'authentification d'identité ou sur le serveur de tunnel.

18. Serveur de tunnel selon l'une des revendications 16 et 17, dans lequel ledit paquet de données IP contenant une commande de tunnel est chiffré ou déchiffré, sur ledit serveur de tunnel source et ledit serveur de destination, en fonction d'une politique de sécurité dérivée de leur négociation l"un avec l'autre et d'une association de sécurité correspondant à la politique de sécurité.
